# EUROPÄISCHE PATENTSCHRIFT

(11) **EP 2 162 805 B1**
(45) Veröffentlichungstag und Bekanntmachung des Hinweises auf die Patenterteilung: **24.10.2012**
(21) Anmeldenummer: 08784246.4
(22) Anmeldetag: 21.06.2008
(51) Int. Cl.: G05B 19/18, G06F 9/455, G05B 19/414, G05B 19/418

(54) **VORRICHTUNG ZUR STEUERUNG EINER MASCHINE SOWIE FERNKOMMUNIKATIONSSYSTEM**
APPARATUS FOR CONTROLLING A MACHINE AND REMOTE COMMUNICATION SYSTEM
DISPOSITIF POUR COMMANDER UNE MACHINE ET SYSTÈME DE TÉLÉCOMMUNICATION

(30) Priorität: 29.06.2007 DE 102007030396
(43) Veröffentlichungstag der Anmeldung: 17.03.2010
(73) Patentinhaber: TRUMPF Werkzeugmaschinen GmbH + Co. KG, 71254 Ditzingen (DE)
(72) Erfinder: BAUER, Klaus, 71254 Ditzingen (DE)
(74) Vertreter: Kohler Schmid Möbus
(86) Internationale Anmeldenummer: PCT/DE2008/001044
(87) Internationale Veröffentlichungsnummer: WO 2009/003446

(56) Entgegenhaltungen:
- EP-A- 1 248 169
- EP-A- 1 715 395
- DE-A1- 10 212 151
- DE-A1-102005 015 919
- DE-U1-202006 010 189
- US-A1- 2003 040 811

## Beschreibung

Die Erfindung betrifft eine Werkzeugmaschinensteuerungsvorrichtung gemäß Oberbegriff von Anspruch 1 sowie ein System zur Fernkommunikation zwischen einem Servicecomputer oder -portal und der Werkzeugmaschinensteuerungsvorrichtung. Im Rahmen der Erfindung wird unter einer Werkzeugmaschine auch ein Lasergerät verstanden.

Eine derartige Werkzeugmaschinensteuerungsvorrichtung ist beispielweise durch die EP 1 715 395 A bekannt geworden.

Das aus der EP 1 715 395 A bekannte System zur Fernkommunikation zwischen einem Service-PC und einer Maschinensteuerung umfasst mindestens einen zentralen Computer; der durch eine Firewall geschützt ist und mehrere nebeneinander lauffähige virtuelle Rechner aufweist, welche jeweils für gleiche oder unterschiedliche Arten von Kommunikationsverbindungen mit Maschinensteuerungen eingerichtet sind, wobei der Service-PC mit dem zentralen Computer über eine Verbindung verbindbar ist und wobei der zentrale Computer mit einer Maschinensteuerung über denjenigen virtuellen Rechner, der für die dieser Maschinensteuerung zugeordnete Kommunikationsverbindung eingerichtet ist, verbindbar ist.

Die globale Ausrichtung heutiger Werkzeugmaschinen- und Laserhersteller mit weltweit ansässigen Kunden und Maschinenbetreibem macht es erforderlich, eine Wartung, Fehlerdiagnose, Software-Aktualisierung und gegebenenfalls auch eine Reparatur der ausgelieferten Werkzeugmaschinen und Laser (im Folgenden unter dem Begriff "Maschinen" zusammengefasst) nicht nur direkt vor Ort, sondern auch per Fernzugriff (Teleservice) leisten zu können. Für Werkzeugmaschinen- und Laserhersteller gibt es keine wirtschaftliche Alternative zur Fernwartung. Allerdings sind Betreiber moderner Produktionsanlagen leidgeprüft, denn ihre Anlagen wurden in der Vergangenheit von eingeschleusten Viren oder Trojanern lahm gelegt. Da die Vernetzung industrieller Produktionsanlagen stetig steigt und mit der Vernetzung auch das Gefährdungspotential zunimmt, haben Kunden, vor allem Großunternehmen, unsicheren Fernwartungslösungen bereits einen Riegel vorgeschoben und umfangreiche Sicherheitsanforderungen formuliert. Für Werkzeugmaschinen- und Laserhersteller hat das fatale Folgen, denn, wenn jeder Kunde seine eigenen Sicherheits-Standards für den Fernzugriff formuliert, ergeben sich "unzählige" Varianten, die von der Art der Einwahl (Modem, ISDN, Internet, GSM, UMTS) über verschiedene VPN-Standards für die Datenverbindung bis zu einer Vielzahl vorgeschriebener Virenscanner und Firewalls reichen.

Um von den Möglichkeiten des Teleservices profitieren zu können, bedarf es einer sicheren, zuverlässigen und störungsfreien Verbindung. Während dazu bisher üblicherweise eine Direkteinwahl von einem Servicecomputer aus über ein analoges Modem oder eine ISDN-Verbindung erfolgte, steigt die Nachfrage nach moderner Kommunikationstechnik, dem so genannten Virtual Private Network. Ein Virtual Private Network (VPN) (dt.: Virtuelles Privates Netz) ist ein Computemetz, das zum Transport privater Daten ein öffentliches Netz, insbesondere das Internet, nutzt, wobei die Verbindung über das öffentliche Netz üblicherweise verschlüsselt wird. Über Verschlüsselung wird ein Netzwerk erzeugt, das nur mit den passenden Adressen und Passwörtern zugänglich ist, so dass nur berechtigte Benutzer miteinander kommunizieren können. VPN ermöglicht somit eine sichere Übertragung über ein unsicheres Netzwerk. Das Internet bietet sich als zentrales Medium für Teleservice auch im Umfeld der Automatisierungstechnik an. Firewall- und VPN-Systeme helfen, die Nutzung des Internets sicher zu gestalten. Neben der deutlich verbesserten Sicherheit bieten IP(Internet Protocol)-basierte Fernwartungsverbindungen eine wesentliche höhere Bandbreite als die konventionelle Modemverbindung. Viele Daten bis hin zur Übertragung von Videoinformationen, z.B. bei verteilten Überwachungssystemen, können breitbandig über das Internet übertragen werden.

Vor allem große Unternehmen bauen ihre Firewall-Gateways zu VPN-Portalen aus, über welche die Werkzeugmaschinen- und Laserhersteller Fernzugriff auf ausgelieferte Werkzeugmaschinen und Laser erhalten. Damit verbunden wird von den Werkzeugmaschinen- und Laserherstellern gefordert, ihre den Werkzeugmaschinen und Lasern beigestellten lokalen Modems und ISDN-Zugänge zu entfernen. Darüber hinaus definieren einige Unternehmen inzwischen Zugriffsvorgaben, die nicht standardisiert sind. Neben VPN werden auch andere Authentifizierungsverfahren, wie z.B. Caller-ID, Preshared Keys, One Time Password oder SecureID, oder Spezial-Hardware eingesetzt.

Ein Fernzugriff über VPN stellt hohe Anforderungen an die Infrastruktur und Sicherheit. Besonders problematisch ist die Tatsache, dass der Fernzugriff über VPN von der beim Maschinenbetreiber eingesetzten Technik abhängig ist. Eine einfache Universallösung auf der Seite der Werkzeugmaschinen- und Laserhersteller wird durch den Umstand behindert, dass es bisher nicht möglich ist, verschiedene VPN Client-Software (z.B. CISCO VPN Client und Checkpoint VPN Client) gleichzeitig innerhalb eines Betriebssystems, d.h. beispielsweise gleichzeitig auf dem Servicecomputer eines Servicemitarbeiters, einzusetzen. Abhängig von der beim Maschinenbetreiber eingesetzten VPN-Lösung sind ein unterschiedlicher VPN-Client und damit ein eigenständiger Rechner erforderlich. Entsprechende Probleme ergeben sich, wenn durch den Maschinenbetreiber noch andere Zugriffsvorgaben und Einwahltechnologien, z.B. RAS über ISDN oder über Modem, gefordert werden. Weitere Probleme ergeben sich, wenn sensible (Zugangs-)Daten des Maschinenbetreibers auf Servicecomputem von Servicemitarbeitern lokal gespeichert sind. Diese Daten sind nur ungenügend gegen Angriffe aus dem Internet oder bei Diebstahl eines Servicecomputers geschützt.

Die Produktlebenszyklen von Hardwarekomponenten, die in Bediencomputem zur Steuerung von Maschinen eingesetzt werden, sind in der Regel deutlich kürzer als die Produktlebenszyklen der Maschinen und der eingesetzten Software (z.B. Maschinen-Bediensoftware). Die eingeschränkte Lieferbarkeit von Hardwarekomponenten führt während des Lebenszyklus eines Maschinentypes zu einer Variantenvielfalt der eingesetzten Bediencomputer-Hardware. Diese unterschiedlichen Hardware-Varianten müssen bei Aktualisierungen der Maschinen-Bediensoftware berücksichtigt und softwareseitig unterstützt werden. In der Regel bedingt eine Hardware-Änderung auch Änderungen in der Software (z.B. Treiber). Folglich muss von den Software-Entwicklern ein extrem hoher Aufwand betrieben werden, damit alle eingesetzten Hardware-Varianten in der Software auch unterstützt werden. Immer wieder müssen größere Änderungen durchgeführt werden, weil bestimmte Treiber für eine neue Hardware nur noch in aktuellen Betriebssystemen unterstützt werden. In der Regel ist dann ein Upgrade des Betriebssystems notwendig. Durch Abhängigkeiten der verschiedenen Software-Komponenten einer Maschine kommt es immer wieder zu einem Zwangstausch weiterer Komponenten (z.B. NCK-Hard- und Software), falls im Ersatzteilfall keine kompatible Hardware zur Verfügung steht. Ein weiteres Problem besteht darin, dass moderne Verschlüsselungssysteme häufig nur unter aktuellen Betriebssystemen funktionieren und nicht unter älteren Betriebssystemen wie Windows 3.11 eingesetzt werden können. Um die Sicherheit auf dem neuesten Stand zu halten, ist es dann erforderlich, ein aktuelles Betriebssystem auf dem Bediencomputer zu installieren.

Aus der DE 102 12 151 A1 ist ein Verfahren für sicherheitskritische Anwendungen in Maschinen, Geräten und/oder Anlagen bekannt, wobei das Verfahren die folgenden Schritte umfasst:
- Empfangen von Daten von dem sicherheitskritischen Prozess:
- Aufrufen eines Anwendungsprogramms zum Verarbeiten der empfangenen Daten in zumindest zwei Verarbeitungsumgebungen;
- Ausgeben der verarbeiteten Daten;
wobei die zumindest zwei Verarbeitungsumgebungen einen zeitdiversitären und/oder datendiversitären Aufruf und/oder Ablauf eines Anwendungsprogramms ermöglichen.

Ausgehend von der EP 1 715 395 A ist es ist die Aufgabe der vorliegenden Erfindung, eine Werkzeugmaschinensteuerung bereitzustellen, bei der Änderungen an der Kommunikationsverbindung flexibel und in jedem Fall ohne Einfluss auf die Maschinen-Bediensoftware durchgeführt werden können.

Diese Aufgabe wird erfindungsgemäß durch eine Werkzeugmaschinensteuerungsvorrichtung mit den Merkmalen von Anspruch 1 gelöst. Vorzugsweise weisen zumindest einige der virtuellen Rechner unterschiedliche Betriebssysteme auf.

Virtuelle Rechner, abgekürzt VM für Virtual Machine, laufen in einer abgekapselten Umgebung unter der Kontrolle eines Virtualisierungsprogramms. Zu den bekannten Virtualisierungsprogrammen gehören bspw. VMware Server, VMware Workstation, Microsoft Virtual Server und Microsoft Virtual PC. Mit Virtualisierung ist es möglich, mehrere virtuelle Rechner mit heterogenen Betriebssystemen einerseits isoliert, andererseits nebeneinander auf der gleichen physischen Maschine auszuführen. Jeder virtuelle Rechner verfügt über einen eigenen virtuellen Hardware-Satz, wie z.B. RAM-Speicher, CPU, NIC, usw., auf den das Betriebssystem und die Anwendungen geladen werden. Der reale, physische Computer, auf dem die virtuellen Rechner laufen, wird als Host-Rechner bezeichnet. Ein virtueller Rechner wird als Gast bezeichnet und das zugehörige Betriebssystem als Gast-Betriebssystem.

Ein virtueller Rechner wirkt wie ein vollwertiger Computer: Weder das Gast-Betriebssystem, noch Anwendungen oder Benutzer merken einen Unterschied zu einem physischen Computer und auch im LAN kann ein virtueller Rechner als vollwertiger Computer mit eigener IP- und MAC-Adresse auftreten. Virtuelle Rechner sind vollständig von dem Host-Rechner und anderen virtuellen Rechnern isoliert. Virtuelle Rechner können nur so miteinander kommunizieren, wie es auch zwischen separaten Computern der Fall wäre, z.B. über Netzwerkverbindungen. Im Falle eines Ausfalls eines virtuellen Rechners bleiben die übrigen virtuellen Rechner und der Host-Rechner davon unberührt. Daten können nicht auf andere virtuelle Rechner ausweichen, und Anwendungen können nur über konfigurierte Netzwerkverbindungen miteinander kommunizieren. Durch die gegenseitige Abschottung der virtuellen Rechner untereinander und zum Host-Rechner können verschiedene Betriebssysteme parallel und unabhängig auf der gleichen Hardware laufen.

Nach dem Einrichten des virtuellen Rechners ist die virtuelle Festplatte noch leer. Wie auf einem physischen Computer muss zunächst ein Betriebssystem installiert werden. Der virtuelle Rechner bootet das Gast-Betriebssystem von der physischen Installations-CD oder von einem ISO-Image. Die Setup-Routine installiert das Gast-Betriebssystem wie gewohnt und kopiert alle Systemdateien auf die virtuelle Festplatte, ohne zu wissen, dass sie nur eine Datei irgendwo auf der Festplatte des Host-Rechners ist. Die Hardware-Erkennung erkennt alle emulierten Geräte, als wären sie real. Anschließend werden sie notwendigen Service-Packs und Patches sowie Tools und die benötigte Anwendungssoftware im Gast installiert.

Erfindungsgemäß wird, um Kompatibilitätsprobleme beim Steuerungsrechner nach einem notwendigen Hardwaretausch zu umgehen, die Maschinen-Bediensoftware auf einem virtuellen Rechner betrieben. Aufwändige Anpassungen und Änderungen in der Maschinen-Bediensoftware können entfallen, da die Maschinen-Bediensoftware weiterhin unter ihrem alten Betriebssystem läuft. Die Abhängigkeiten der Maschinen-Bediensoftware von den Hardware-Generationen während der Produktlebensdauer der Maschine werden durch Einsatz virtualisierter Hardware beherrschbar. Die Software (z.B. Maschinen-Bediensoftware) wird innerhalb eines virtualisierten Rechners installiert und betrieben. Das Betriebssystem des Host-Rechners (Master-Betriebssystem) auf der physikalischen Hardware wird nur verwendet, um die virtuellen Hardwareumgebungen bereit zu stellen. Im Ersatzteilfall kann nahezu jede beliebige Hardware eingesetzt werden, auf der die virtuelle Umgebung lauffähig eingesetzt werden kann. Eine Anpassung der innerhalb der virtuellen Umgebung betriebenen Softwareapplikation (z.B. MMC) ist nicht notwendig, da sich die Laufzeitumgebung (Betriebssystem, Speicher, Anzahl Prozessoren, Infrastruktur wie z.B. Netzwerkkarten, Grafik-Karte, ...) aus Sicht der betriebenen Software-Applikation nicht ändert. Durch parallelen Betrieb mehrerer virtueller Umgebungen auf einer physisch vorhandenen Hardware können außerdem Kosten eingespart werden

Erfindungsgemäß können weiterhin verschiedene Anwendungen, wie Maschinen-Bediensoftware sowie Internet-Anbindung und -verschlüsselung, über getrennte virtuelle Rechner erfolgen. Durch die Verwendung von virtuellen Rechnern bzw. von virtualisierter Hardware mit einem eigenständigen Betriebssystem können gegenseitige Abhängigkeiten und Seiteneffekte (negative Auswirkungen) vermieden werden. Statt wie bisher die Verschlüsselung der Internet-Verbindung des Steuerungsrechners über eine separate Box vorzunehmen, wird erfindungsgemäß die gesamte Kommunikationsverbindung nicht innerhalb des Hauptbetriebssystem des Steuerungsrechners realisiert, sondern innerhalb einer virtualisierten Hardware mit einem eigenständigen Betriebssystem.

Die Erfindung betrifft in einem weiteren Aspekt auch ein System zur Fernkommunikation zwischen einem Servicecomputer oder -portal und der wie oben beschriebenen Werkzeugmaschinensteuerungsvorrichtung.

Ein Fernkommunikationssystem zwischen einem Servicecomputer und einer Maschinensteuerung für einen sicheren Fernzugriff auf die Maschine ist beispielsweise aus EP 1 715 395 A bekannt. Dieses bekannte Fernkommunikationssystem umfasst einen durch eine Firewall geschützten zentralen Computer mit mehreren virtuellen Rechnern und einer Datenbank, die sämtliche Daten (Einwahltechnik, Passwörter, VPN-Lösung) über den Kunden und die Maschine gespeichert hat. Auf dem zentralen Computer sind mehrere virtuelle Rechner installiert, die unterschiedliche Betriebssysteme und Anwertdungssoftware (wie Virenschutzprogramme) aufweisen. Für jeden Kunden und jede Maschinensteuerung gibt es einen speziell konfigurierten virtuellen Rechner, über den die Verbindung vom zentralen Computer zur Maschinensteuerung hergestellt wird. Der zentrale Computer ermittelt anhand der in der Datenbank gespeicherten Daten die zugeordnete Verbindung und den zugeordneten virtuellen Rechner und stellt die Verbindung zur Maschinensteuerung über das Internet her. Der Servicecomputer ist nicht direkt mit der Maschine verbunden, sondern die Verbindung erfolgt über den geschützten zentralen Computer. Die Verbindung zwischen dem Servicecomputer und dem zentralen Computer sowie die Verbindung zwischen dem zentralen Computer und der Maschinensteuerung erfolgen über das Internet, jeweils über eine gesicherte VPN-Verbindung.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: schematisch den prinzipiellen Aufbau einer Vorrichtung zur Steuerung einer Maschine mit einem als Bediencomputer ausgebildeten Steuerungsrechner;
- Fig. 2: schematisch den prinzipiellen Aufbau des erfindungsgemäßen virtualisierten Bediencomputers von Fig. 1;
- Fig. 3: schematisch den prinzipiellen Aufbau des erfindungsgemäßen Fernkommunikationssystems zwischen dem in Fig. 2 gezeigten Bediencomputer und einem Servicecomputer oder -portal; und
- Fig. 4: das Fernkommunikationssystem von Fig. 3, wobei der Bediencomputer an das Intranet des Maschinenbetreibers und der Servicecomputer an das Intranet des Maschinenherstellers angeschlossen ist.

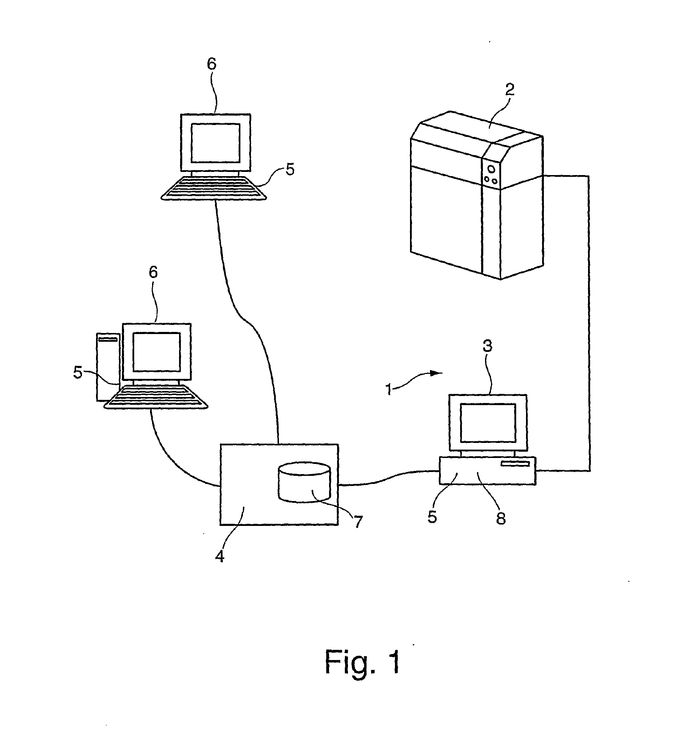

Die in **Fig. 1** gezeigte Vorrichtung **1** zur Steuerung einer Maschine **2** umfasst einen hier als Bediencomputer **3** ausgebildeten Steuerungsrechner, der mit der Maschine 2 und einem Server **4** verbunden ist. Auf dem Bediencomputer 3 sind eine Maschinen-Bediensoftware und eine Software wie PC-Anywhere, über die ein Fernzugriff auf die Maschine 2 erfolgt, und ggf. weitere Anwendungen installiert. NC-Programme für einen Fertigungsauftrag werden nicht mehr manuell sondern mit Hilfe von Programmiersystemen **5** erstellt. Das Programmiersystem 5 ist auf dem Bediencomputer 3 der Maschine 2 oder einem oder mehreren Computern **6** (Notebook, Tower-PC) im IT-Netzwerk installiert. Der Programmierer legt das fertige NC-Programm in einer Datenbank **7** auf dem Server 4 ab. Der Maschinenbediener kann auf die Datenbank 7 des Servers 4 zugreifen und das NC-Programm direkt am Bediencomputer 3 aufrufen. Der Datentransfer des NC-Programms kann auch über ein Speichermedium wie eine Diskette, CD-ROM oder einen USB-Stick erfolgen. Das Programmiersystem 5 setzt die Strategien, die der Programmierer ausgewählt hat, um. Es legt die Bearbeitungsreihenfolge fest, setzt Einstichpunkte, rundet spitze Ecken ab und ergänzt kleine Loopings. Damit die Bearbeitungsqualität stimmt, liefert das NC-Programm der Maschinensteuerung 1 passende Werte für die Bearbeitungsparameter wie z.B. Laserleistung und Vorschubgeschwindigkeit. Diese Werte sind in Technologietabellen **8** gespeichert. Technologietabellen 8 sind Wissensspeicher, die prozesssichere Werte für alle Bearbeitungsparameter enthalten. Sie werden für jede Materialart und Materialdicke angelegt, wobei auch der Lasertyp, die Konturgröße und Optikbrennweite berücksichtigt werden. Jede Technologietabelle 8 hat eine Nummer und ist in der Maschinensteuerung 1, d.h. auf dem Bediencomputer 3, abgelegt. Sie kann zentral gepflegt und aktualisiert werden und steht für jeden Fertigungsauftrag zur Verfügung. Im NC-Programm stehen keine Werte für die Bearbeitungsparameter, sondern die Nummer der Technologietabelle 8, in der die passenden Werte gespeichert sind. Während der Bearbeitung greift die Maschinensteuerung 1 auf die Technologietabelle 8 zu. Was im NC-Programm steht, setzt die Maschinensteuerung 1 in die Tat um, sie berechnet die Bewegungen der Maschinenachsen und regelt Laserleistung und Gaszufuhr.

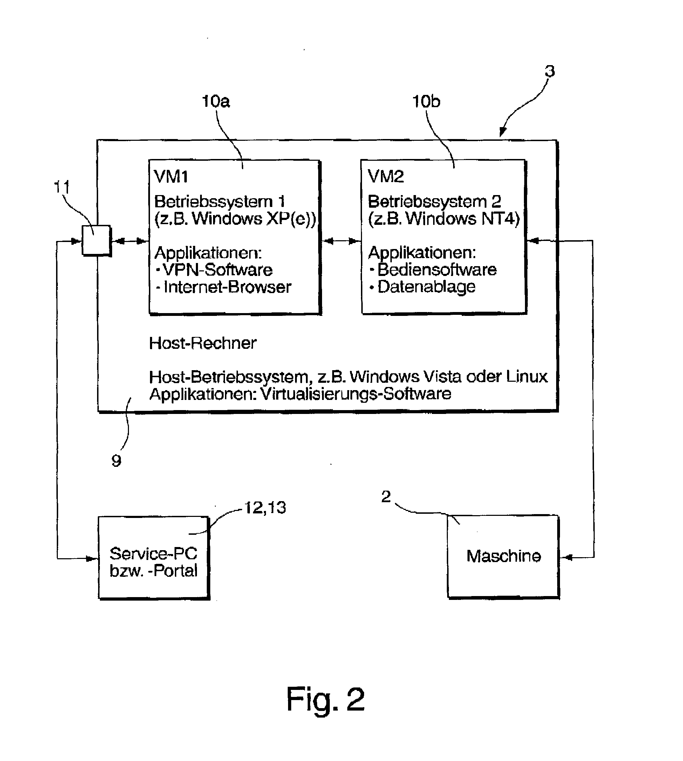

In **Fig. 2** ist schematisch der Aufbau des Bediencomputers 3 der Maschine 2 (Werkzeugmaschine oder Laser) gezeigt, auf dem die Maschinen-Bediensoftware und ggfs. weitere Anwendungssoftware betrieben wird. Der Bediencomputer 3 ist als Host-Rechner **9** mit zwei virtuellen Rechnern **10a**, **10b** eingerichtet und weist eine Netzwerkkarte **11** zur Anbindung an einen Servicecomputer **12** oder an ein Serviceportal **13** auf.

Die virtuellen Rechner 10a, 10b laufen in einer abgekapselten Umgebung auf dem Bediencomputer 3 unter der Kontrolle einer Virtuatisierungs-Software, die auf dem Host-Rechner 9 installiert ist. Der Host-Rechner 9 wird mit einem Host-Betriebssystem (z.B. Windows Vista oder Linux) betrieben. Der eine virtuelle Rechner 10a, in Fig. 2 als VM1 bezeichnet, wird mit einem ersten Betriebssystem, z.B. Windows XP(e), betrieben und auf ihm sind alle Anwendungen installiert, die die Kommunikationsverbindung des Host-Rechners 9 betreffen, also insbesondere die Internet-Anbindung (Internet-Browser) und die Intemet-Verschlüssung (VPN-Software). Der andere virtuelle Rechner, in Fig. 2 als VM2 bezeichnet, wird mit einem zweiten Betriebssystem, z.B. Windows NT4.0, betrieben und auf ihm ist die Maschinen-Bediensoftware installiert. Außerdem weist die virtuelle Maschine 4b noch eine Datenablage, z.B. für die Technologietabellen 8 und für Daten über vorhandene Werkzeuge der Maschine, auf. Auch das Programmiersystem 5 zum Erstellen von NC-Programmen kann als virtueller Rechner ausgeführt sein.

Für den Fall, dass eine Hardwarekomponente des Bediencomputers 3 gegen eine andere, nicht kompatible Hardwarekomponente ausgetauscht werden muss, wird zunächst eine Sicherungsdatei des virtuellen Rechners 10b angefertigt. Da der virtuelle Rechner 10b nichts anderes als eine Datei auf der Festplatte des Host-Rechners 9 darstellt, ist die Sicherungsdatei eine Kopie der Datei, welche auf dem Server 4 des IT-Netzwerks oder einem Speichermedium wie einer Diskette, CD-ROM oder einem USB-Stick gespeichert wird. Nachdem die Hardwarekomponente ausgetauscht wurde, werden zunächst das Host-Betriebssystem, das identisch oder verschieden zu dem zuvor installierten Host-Betriebssystem sein kann, und anschließend die Virtualisierungs-Software auf dem Host-Rechner 9 installiert. Nachdem der virtuelle Rechner 10b über die Virtualisierungs-Software angelegt wurde, erfolgt die Installation des Gast-Betriebssystems und der Anwendungssoftware (Maschinen-Bediensoftware etc.) durch Kopieren der Sicherungsdatei. Es ist keine erneute Installation des Gast-Betriebssystems und der Anwendungssoftware erforderlich.

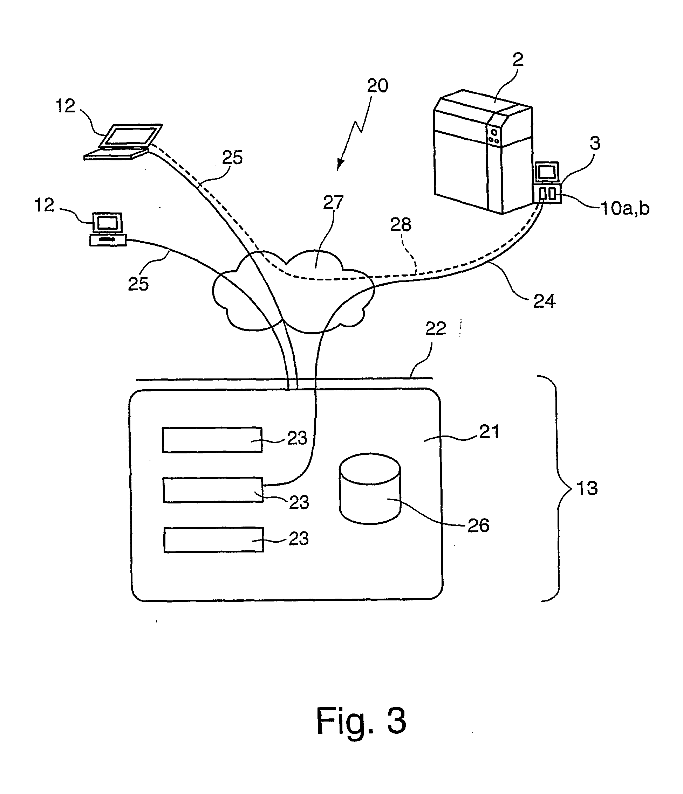

Das in **Fig. 3** gezeigte System **20** dient zur Fernkommunikation zwischen dem wie oben beschrieben aufgebauten Bediencomputer 3 der Maschine 2 und dem Servicecomputer 12 oder dem Serviceportal 13, um eine Wartung, Fehlerdiagnose, Software-Aktualisierung und gegebenenfalls eine Reparatur der Maschine 2 per Fernzugriff zu ermöglichen.

Das System 20 umfasst mindestens einen zentralen Computer **21**, der durch eine Firewall **22** nach außen geschützt ist und mehrere nebeneinander lauffähige virtuelle Rechner **23** aufweist. Diese einzelnen virtuellen Rechner 23 sind, wie unten noch näher ausgeführt, jeweils für gleiche oder unterschiedliche Arten von Verbindungen **24** mit Bediencomputern 3 eingerichtet. Der Servicecomputer 12 eines Servicemitarbeiters ist mit dem zentralen Computer 21 über eine Verbindung **25**, welche insbesondere nur die Übertragung von Pixel-Informationen, Maus- und Tastaturbewegungen erlaubt, verbunden. Der zentrale Computer 21 ist mit dem Bediencomputer 3 der Maschine 2 über denjenigen virtuellen Rechner 23, der für die dieser Maschine 2 zugeordnete Verbindung 24 eingerichtet ist, verbunden. Die Zuordnung von Maschinen 2 mit ihren Bediencomputem 3 zu ihren jeweiligen Verbindungen 24 ist in einer Datenbank **26** des zentralen Computers 21 gespeichert. Die virtuellen Rechner 23 des zentralen Computers 21 weisen unterschiedliche Betriebssysteme mit unterschiedlichen Anwendungsprogrammen auf, welche die Verbindung 24 zwischen dem zentralen Computer 21 und unterschiedlichen Bediencomputern 3 herstellen. Der Bediencomputer 3 weist mehrere virtuelle Rechner 10a, 10b auf, die über eine virtuelle Netzwerkkarte miteinander kommunizieren können. Auf dem virtuellen Rechner 10a sind sämtliche Anwendungen installiert, die die Verbindung des Bediencomputers 3 mit der Außenwelt betreffen, wie Internet-Verbindung und Verschlüsselung. Die Verbindung 25 zwischen dem Servicecomputer 12 und dem zentralen Computer 21 sowie die Verbindung 24 zwischen dem zentralen Computer 21 und dem jeweiligen Bediencomputer 3 erfolgen über das Internet **27**, und zwar jeweils über eine VPN-Verbindung. Der zentrale Computer 21 samt Firewall 22 bildet das Serviceportal 13.

Für einen Fernzugriff auf den Bediencomputer 3 der Maschine 2 stellt ein Servicemitarbeiter zunächst die Verbindung 25 zwischen seinem Servicecomputer 12 und dem durch die Firewall 22 geschützten zentralen Computer 21 her. Der Servicemitarbeiter autorisiert sich beim zentralen Computer 21 und wählt den betreffenden Kunden und die Maschine 2 aus. Alle individuellen Vorgaben (Passwörter) des Kunden sind zentral in der Datenbank 26 gespeichert. Anhand der in der Datenbank 26 gespeicherten Daten ermittelt der zentrale Computer 21 die der Maschine 2 zugeordnete Verbindung 24 und wählt denjenigen virtuellen Rechner 23, der für diese Verbindung 24 eingerichtet ist, für die Verbindung mit dem Bediencomputer 3 aus und startet diesen virtuellen Rechner 23. Über die Verbindung 24 führt der Servicemitarbeiter Funktionen des Bediencomputers 3 aus und/oder tauscht Dateien zwischen dem Bediencomputer 3 und dem zentralen Computer 21 aus, wobei der Bediencomputer 3 einer beim Kunden stehenden Maschine 2 nicht direkt mit dem Servicecomputer 12, sondern nur über den geschützten zentralen Computer 21 verbunden ist. Das Fernkommunikationssystem 20 ermöglicht, dass sich mehrere Servicemitarbeiter gleichzeitig mit ihren Servicecomputem 12 über den zentralen Computer 21 mit dem Bediencomputer 3 der Maschine 2 verbinden. Je nach Problemlage können sich Servicemitarbeiter oder Spezialisten aus unterschiedlichen Standorten über den zentralen Computer 21 mit dem Bediencomputer 3 verbinden.

Aus Sicherheitsgründen erfolgt ein Fernzugriff auf die Maschine 2 durch einen Servicemitarbeiter nur mit Einverständnis des Maschinenbetreibers. Dazu ist eine entsprechende Applikation auf dem Bediencomputer 3 installiert, die vom Maschinenbetreiber angewendet werden muss. Der zentrale Computer 21 richtet eine Anfrage an die Maschinensteuerung und wartet darauf, dass der Maschinenbetreiber die Maschine 2 für den Fernzugriff freischaltet. Alternativ ist auch möglich, dass der Servicemitarbeiter telefonisch beim Maschinenbetreiber um Freischaltung bittet. Wenn der Maschinenbetreiber den Fernzugriff auf die Maschine 2 freigeschaltet hat, stellt der zentrale Computer 21 zunächst die Verbindung 24 mit dem virtuellen Rechner 10a her. Die virtuellen Rechner 10a, 10b und der Host-Rechner 9 sind untereinander durch physische und virtuelle Netzwerkkarten verbunden. Der Servicemitarbeiter kann über den virtuellen Rechner 10a, der als Router wirkt, auf den Host-Rechner 9 und den weiteren virtuellen Rechner 10b zugreifen. Über die Verbindung 24 führt der Servicemitarbeiter Funktionen des Bediencomputers 3 aus und/oder tauscht Dateien zwischen dem Bediencomputer 3 und dem zentralen Computer 21 aus. Der Servicemitarbeiter kann bspw. die Maschinen-Bediensoftware und/oder die Technologietabellen 8 auf dem virtuellen Rechner 10b aktualisieren. Der Bediencomputer 3 einer beim Kunden stehenden Maschine 2 ist nicht direkt mit dem Servicecomputer 12, sondern nur über den geschützten zentralen Computer 21 verbunden.

Wie in Fig. 3 gestrichelt angedeutet, ist auch eine direkte Verbindung **28** zwischen dem Bediencomputer 3 und dem Servicecomputer 12 über das Internet 27 möglich, wobei diese direkte Verbindung 28 dann durch entsprechende Sicherungssysteme abgesichert sein muss.

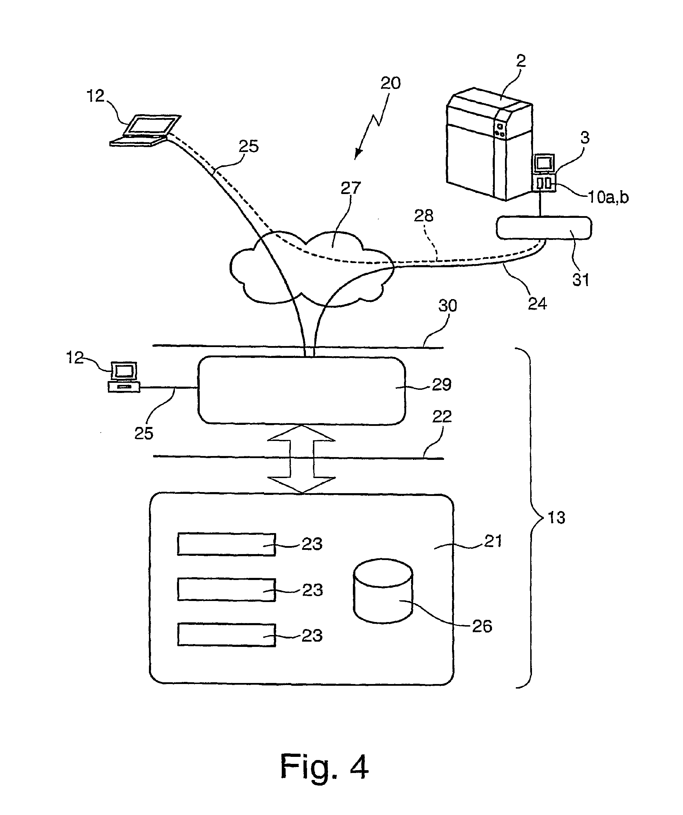

In **Fig. 4** ist der zentrale Computer 21 über die Firewall 22 an das Intranet (Hausnetz) **29** des Maschinenherstellers angeschlossen, welches über eine weitere Firewall **30** mit dem Internet 27 verbunden ist. Außerdem ist der Bediencomputer 3 an das Intranet (Hausnetz) **31** des Maschinenbetreibers angeschlossen, welches ebenfalls mit dem Internet 27 verbunden ist. Der zentrale Computer 21 ist ein geschützter LAN Bereich (VLAN), welcher über die Firewall 22 vom Intranet 29 des Maschinenherstellers abgetrennt ist. Nur bestimmte Personen haben Zugriff auf die Struktur hinter der Firewall 22. Der Servicecomputer 12 ist entweder direkt über das Intranet 29 des Maschinenherstellers oder über das Internet 27 mit dem zentralen Computer 21 verbunden. Wie in Fig. 4 gestrichelt angedeutet, ist auch hier eine direkte Verbindung 28 zwischen dem Bediencomputer 3 und dem Servicecomputer 12 über das Internet 27 möglich, wobei diese direkte Verbindung 28 dann durch entsprechende Sicherungssysteme abgesichert sein muss.

## Patentansprüche

1. Vorrichtung (1) zur Steuerung einer Werkzeugmaschine (2) mit einer Maschinensteuerung in Form eines Steuerungsrechners (3), auf dem eine Maschinen-Bediensoftware betrieben wird,
**dadurch gekennzeichnet,**
**dass** die Maschinensteuerung einen ersten virtuellen Rechner (10a) und einen zweiten virtuellen Rechner (10b) aufweist,
**dass** der erste virtuelle Rechner (10a) mit einem ersten Betriebssystem und der zweite virtuelle Rechner (10b) mit einem zweiten Betriebssystem betrieben wird,
**dass** auf dem ersten virtuellen Rechner (10a) eine Internet-Anbindung installiert ist, und
**dass** auf dem zweiten virtuellen Rechner (10b) eine Maschinen-Bediensoftware installiert ist.

2. Werkzeugmaschinensteuerungsvorrichtung nach Anspruch 1, **dadurch gekennzeichnet, dass** der erste und der zweite virtuelle Rechner (10a, 10b) unterschiedliche Betriebssysteme aufweisen.

3. Werkzeugmaschinensteuerungsvorrichtung nach Anspruch 1 oder 2,
**dadurch gekennzeichnet, dass** der erste und der zweite virtuelle Rechner (10a, 10b) über eine virtuelle Netzwerkkarte miteinander kommunizieren.

4. Werkzeugmaschinensteuerungsvorrichtung nach einem der vorhergehenden Ansprüche, **dadurch gekennzeichnet, dass** der Steuerungsrechner (3) als Host-Rechner (9) mit den zwei virtuellen Rechnern (10a, 10b) eingerichtet ist und die virtuellen Rechner (10a, 10b) und der Host-Rechner (9) untereinander durch physische und virtuelle Netzwerkkarten verbunden sind.

5. Werkzeugmaschinensteuerungsvorrichtung nach einem der vorhergehenden Ansprüche, **dadurch gekennzeichnet, dass** der Steuerungsrechner (3) als Host-Rechner (9) mit den zwei virtuellen Rechnern (10a, 10b) eingerichtet ist und eine Netzwerkkarte (11) zur Anbindung an einen Servicecomputer (12) oder an ein Serviceportal (13) aufweist.

6. System (20) zur Fernkommunikation zwischen einem Servicecomputer (12) oder einem Serviceportal (13) und einer eine Maschinensteuerung in Form eines Steuerungsrechners (3) aufweisenden Werkzeugmaschinensteuerungsvorrichtung (1) nach einem der vorhergehenden Ansprüche, das System enthaltend die Werkzeugmaschinensteuerungsvorrichtung, wobei die Kommunikationsverbindung (24, 25, 28) über das Internet (27), insbesondere über eine VPN-Verbindung, erfolgt.

7. System nach Anspruch 6, **dadurch gekennzeichnet, dass** die Kommunikationsverbindung (24, 25) zwischen dem Servicecomputer (12) oder Serviceportal (13) und der Maschinensteuerung über mindestens einen zentralen Computer (21) erfolgt, der durch eine Firewall (22) geschützt ist und mehrere nebeneinander lauffähige virtuelle Rechner (23) aufweist, welche jeweils für gleiche oder unterschiedliche Arten von Kommunikationsverbindungen (24, 25) mit Maschinensteuerungen eingerichtet sind, wobei der Servicecomputer (12) mit dem zentralen Computer (21) über eine Internetverbindung (25) verbindbar ist und wobei der zentrale Computer (21) mit einer Maschinensteuerung über denjenigen virtuellen Rechner (23), der für die dieser Maschinensteuerung zugeordnete Kommunikationsverbindung (24) eingerichtet ist, über eine Internetverbindung (24) verbindbar ist.

8. System nach Anspruch 6, **dadurch gekennzeichnet, dass** die Kommunikationsverbindung (24, 25) zwischen dem Servicecomputer (12) oder Serviceportal (13) und der Maschinensteuerung unmittelbar über das Internet (27) erfolgt.

## Claims

1. Device (1) for controlling a machine tool (2), comprising a machine control in the form of a control computer (3) on which a machine operating software is operated,
**characterized in that**
the machine control comprises a first virtual computer (10a) and a second virtual computer (10b),
the first virtual computer (10a) is operated with a first operating system and the second virtual computer (10b) is operated with a second operating system, an Internet connection is installed on the first virtual computer (10a), and a machine operating software is installed on the second virtual computer (10b).

2. Machine tool control device according to claim 1, **characterized in that** the first and the second virtual computer (10a, 10b) have different operating systems.

3. Machine tool control device according to claim 1 or 2, **characterized in that** the first and the second virtual computer (10a, 10b) communicate with each other via a virtual network interface card.

4. Machine tool control device according to any one of the preceding claims, **characterized in that** the control computer (3) is designed as a host computer (9) with the two virtual computers (10a, 10b), and the virtual computers (10a, 10b) and the host computer (9) are interconnected via physical and virtual network interface cards.

5. Machine tool control device according to any one of the preceding claims, **characterized in that** the control computer (3) is designed as a host computer (9) with the two virtual computers (10a, 10b) and has a network interface card (11) for connection to a service computer (12) or to a service portal (13).

6. System (20) for remote communication between a service computer (12) or a service portal (13) and a machine tool control device (1) comprising a machine control in the form of a control computer (3) according to any one of the preceding claims, the system comprising the machine tool control device, wherein the communication connection (24, 25, 28) is realized via the Internet (27), in particular, via a VPN connection.

7. System according to claim 6, **characterized in that** the communication connection (24, 25) between the service computer (12) or service portal (13) and the machine control is realized via at least one central computer (21) which is protected by a firewall (22) and has several virtual computers (23) which can be run parallel to each other and are each designed for the same or different types of communication connections (24, 25) to machine controls, wherein the service computer (12) can be connected to the central computer (21) via an Internet connection (25) and wherein the central computer (21) can be connected via an Internet connection (24) to a machine control via the virtual computer (23) which is designed for the communication connection (24) allocated to this machine control.

8. System according to claim 6, **characterized in that** the communication connection (24, 25) between the service computer (12) or the service portal (13) and the machine control is realized directly via the Internet (27).

## Revendications

1. Dispositif (1) pour commander une machine-outil (2), avec une commande de machine sous la forme d'un calculateur de commande (3) sur lequel est exécuté un logiciel de commande de machine,
**caractérisé en ce que** la commande de machine présente un premier calculateur virtuel (10a) et un deuxième calculateur virtuel (10b),
**en ce que** le premier calculateur virtuel (10a) fonctionne avec un premier système d'exploitation et le deuxième calculateur virtuel (10b) avec un deuxième système d'exploitation,
**en ce qu'**une connexion Internet est installée sur le premier calculateur virtuel (10a),
et **en ce qu'**un logiciel de commande de machine est installé sur le deuxième calculateur virtuel (10b).

2. Dispositif de commande de machine-outil selon la revendication 1, **caractérisé en ce que** le premier et le deuxième calculateurs virtuels (10a, 10b) présentent des systèmes d'exploitation différents.

3. Dispositif de commande de machine-outil selon la revendication 1 ou 2, **caractérisé en ce que** le premier et le deuxième calculateurs virtuels (10a, 10b) communiquent entre eux par l'intermédiaire d'une carte réseau virtuelle.

4. Dispositif de commande de machine-outil selon l'une des revendications précédentes, **caractérisé en ce que** le calculateur de commande (3) est conçu comme calculateur hôte (9) pourvu des deux calculateurs virtuels (10a, 10b), et les calculateurs virtuels (10a, 10b) et le calculateur hôte (9) sont reliés entre eux par des cartes réseau physiques et virtuelles.

5. Dispositif de commande de machine-outil selon l'une des revendications précédentes, **caractérisé en ce que** le calculateur de commande (3) est conçu comme calculateur hôte (9) pourvu des deux calculateurs virtuels (10a, 10b), et présente une carte réseau (11) pour la connexion à un ordinateur de maintenance (12) ou à un portail de maintenance (13).

6. Système (20) de télécommunication entre un ordinateur de maintenance (12) ou un portail de maintenance (13) et un dispositif de commande de machine-outil (1) présentant une commande de machine sous la forme d'un calculateur de commande (3) selon l'une des revendications précédentes, le système comprenant le dispositif de commande de machine-outil (1), sachant que la liaison de communication (24, 25, 28) s'effectue par l'Internet (27), en particulier par une liaison VPN (réseau privé virtuel).

7. Système selon la revendication 6, **caractérisé en ce que** la liaison de communication (24, 25) entre l'ordinateur de maintenance (12) ou le portail de maintenance (13) et la commande de machine s'effectue par l'intermédiaire d'au moins un ordinateur central (21), qui est protégé par un pare-feu (22) et qui présente plusieurs calculateurs virtuels (23) pouvant fonctionner en parallèle et respectivement conçus pour des types identiques ou différents de liaisons de communication (24, 25) avec des commandes de machine, sachant que l'ordinateur de maintenance (12) peut être relié à l'ordinateur central (21) par une liaison Internet (25) et sachant que l'ordinateur central (21) peut être relié par une liaison Internet (24) à une commande de machine par l'intermédiaire du calculateur virtuel (23) qui est prévu pour la liaison de communication (24) associée à cette commande de machine.

8. Système selon la revendication 6, **caractérisé en ce que** la liaison de communication (24, 25) entre l'ordinateur de maintenance (12) ou le portail de maintenance (13) et la commande de machine s'effectue directement par l'Internet (27).
